# EUROPEAN PATENT APPLICATION

(11) **EP 3 136 786 A1**
(43) Date of publication of application: **01.03.2017**
(21) Application number: 15795772.1
(22) Date of filing: 04.02.2015
(51) Int. Cl.: H04W 40/22

(54) **METHOD, DEVICE, AND SYSTEM FOR DATA TRANSMISSION IN MULTIUSER COORDINATED COMMUNICATION SCENARIO**

(30) Priority: 23.05.2014 CN 201410223245
(71) Applicant: Huawei Technologies Co., Ltd., Longgang District Shenzhen, Guangdong 518129 (CN)
(72) Inventor: MA, Jie, Shenzhen Guangdong 518129 (CN); LI, Yue, Shenzhen Guangdong 518129 (CN)
(74) Representative: Goddar, Heinz J.
(86) International application number: PCT/CN2015/072231
(87) International publication number: WO 2015/176557

(57) **Abstract**

Embodiments of the present invention provide a data transmission method, apparatus, and system in a multiple user cooperative communication scenario. The method includes: determining, by a first device, first data and second data from to-be-transmitted data according to link quality of a direct link and link quality of a forwarding link, where the first data is data directly transmitted from the first device to a second device, the second data is data transmitted from the first device to the second device through a third device, the third device is configured to assist in communication between the first device and the second device, the direct link is a link for directly transmitting the first data from the first device to the second device, and the forwarding link is a link for transmitting the second data from the first device to the second device through the third device; directly transmitting, by the first device, the first data to the second device; and transmitting, by the first device, the second data to the second device through the third device. Therefore, in a multiple user cooperative communication scenario, a data transmission throughput can be improved.

## Description

### TECHNICAL FIELD

Embodiments of the present invention relate to wireless communications technologies, and in particular, to a data transmission method, apparatus, and system in a multiple user cooperative communication scenario.

### BACKGROUND

A protocol stack of a Long Term Evolution (Long Term Evolution, LTE) Radio Access Network radio access network (Radio Access Network, RAN) is divided into three layers. User equipment (User Equipment, UE) in an LTE system has two communication modes: in one communication mode, communication is performed by using a cellular base station, that is, data transmitted between two UEs is relayed by the base station; and in the other communication mode, UE directly transmits and exchanges data with a neighboring UE of the UE.

To implement improvement of a system throughput of particular UE in an LTE system by means of cooperation of multiple UEs, a multiple user cooperative communication (Multiple User Cooperative Communication, MUCC) technology is introduced to the LTE system. The MUCC technology refers to using supporting UE as a relay in the LTE system, where the supporting UE can be used to assist in data communication between benefited UE and a base station. However, after MUCC is introduced to the protocol stack, an aggregation layer is formed, which causes a problem of a low data transmission throughput in an MUCC scenario.

### SUMMARY

Embodiments of the present invention provide a data transmission method, apparatus, and system in a multiple user cooperative communication scenario, so as to resolve a problem of a low data transmission throughput in a multiple user cooperative communication scenario in the prior art.

A first aspect of the embodiments of the present invention provides a data transmission method in a multiple user cooperative communication scenario, including:
determining, by the first device, first data and second data from to-be-transmitted data according to link quality of a direct link and link quality of a forwarding link, where the first data is data directly transmitted from the first device to a second device, the second data is data transmitted from the first device to the second device through a third device, the third device is configured to assist in communication between the first device and the second device, the direct link is a link for directly transmitting the first data from the first device to the second device, and the forwarding link is a link for transmitting the second data from the first device to the second device through the third device;
directly transmitting, by the first device, the first data to the second device; and
transmitting, by the first device, the second data to the second device through the third device.

In a first possible implementation manner of the first aspect, the determining, by a first device, first data and second data from to-be-transmitted data according to link quality of a direct link and link quality of a forwarding link includes:
determining, by the first device from the to-be-transmitted data according to a ratio between data transmission rates of the direct link and the forwarding link, the first data to be transmitted on the direct link and the second data to be transmitted on the forwarding link; and/or
determining, by the first device from the to-be-transmitted data according to a volume of data that has not been transmitted on the direct link and a volume of data that has not been transmitted on the forwarding link, the first data to be transmitted on the direct link and the second data to be transmitted on the forwarding link.

With reference to the first aspect or the first possible implementation manner of the first aspect, in a second possible implementation manner of the first aspect, after the determining first data and second data from to-be-transmitted data, the method further includes:
adding, by the first device, a first link data packet sequence number to the first data, where the first data packet sequence number is used to identify an unreceived data packet in the first data; and
adding, by the first device, a second link data packet sequence number to the second data, where the second link data packet sequence number is used to identify an unreceived data packet in the second data.

With reference to the second possible implementation manner of the first aspect, in a third possible implementation manner of the first aspect, after the determining first data and second data from to-be-transmitted data, the method further includes:
adding, by the first device, a sub-flow identifier and a flow sequence number to the second data, where the sub-flow identifier is used to identify the second device corresponding to the second data, and the flow sequence number is used to identify the third device corresponding to the second data.

With reference to the second or the third possible implementation manner of the first aspect, in a fourth possible implementation manner of the first aspect, after the determining first data and second data from to-be-transmitted data, the method further includes:
adding, by the first device, a first radio bearer identifier to the first data, where the first radio bearer identifier is used to represent a service to which the first data belongs; and
adding, by the first device, a second radio bearer identifier to the second data, where the second radio bearer identifier is used to represent a service to which the second data belongs.

With reference to any one of the second to the fourth possible implementation manners of the first aspect, in a fifth possible implementation manner of the first aspect, after the determining first data and second data from to-be-transmitted data, the method further includes:
transmitting, by the first device, first configuration information to the second device, where the first configuration information includes: a first logic sub-identifier corresponding to each radio bearer RB of the second device, and where the first logic sub-identifier is used to represent that the first data and the second data are transmitted on the RB.

With reference to the fifth possible implementation manner of the first aspect, in a sixth possible implementation manner of the first aspect, after the determining first data and second data from to-be-transmitted data, the method further includes:
transmitting, by the first device, second configuration information to the third device, where the second configuration information includes: a second logic sub-identifier corresponding to each RB of the third device, and the second logic sub-identifier is used to represent that the second data is forwarded on the RB.

With reference to any one of the second to the sixth possible implementation manners of the first aspect, in a seventh possible implementation manner of the first aspect, after the directly transmitting, by the first device, the first data to the second device, the method further includes:
if the first device does not receive, from the second device within a first set time, a reception acknowledgment for the first data, sending, by the first device, the first data to the third device, so that the third device forwards the first data to the second device.

With reference to the seventh possible implementation manner of the first aspect, in an eighth possible implementation manner of the first aspect, after the transmitting, by the first device, the second data to the second device through the third device, the method further includes:
if the first device does not receive, from the third device within a second set time, a reception acknowledgment for the second data, directly transmitting, by the first device, the second data to the second device.

A second aspect of the embodiments of the present invention provides a data transmission method in a multiple user cooperative communication scenario, including:
receiving, by a third device, second data sent by a first device, where the third device is configured to assist in communication between the first device and a second device, the second data is determined by the first device from to-be-transmitted data according to quality of a direct link and quality of a forwarding link, the direct link is a link for directly transmitting first data from the first device to the second device, and the forwarding link is a link for transmitting the second data from the first device to the second device through the third device; and
forwarding, by the third device, the second data to the second device.

In a first possible implementation manner of the second aspect, when the second data includes a second link data packet sequence number, after the receiving, by a third device, second data sent by a first device, the method further includes:
determining, by the third device, an unreceived data packet sequence number in the second data according to the second link data packet sequence number; and
requesting, by the third device, the first device to retransmit a data packet that corresponds to the unreceived data packet sequence number.

With reference to the first possible implementation manner of the second aspect, in a second possible implementation manner of the second aspect, the second data includes a second radio bearer identifier, where the second radio bearer identifier is used to represent a service to which the second data belongs; and
after the receiving, by a third device, second data sent by a first device, the method further includes:
re-encapsulating, by the third device, a first data packet in the second data into at least one second data packet, where data in each second data packet has a same second radio bearer identifier.

With reference to the first or the second possible implementation manner of the second aspect, in a third possible implementation manner of the second aspect, the receiving, by a third device, second data sent by a first device includes:
receiving, by the third device, the second data that is sent by the first device and carries a flow sequence number and a sub-flow identifier, where the flow sequence number is used to identify the third device corresponding to the second data, and the sub-flow identifier is used to identify the second device corresponding to the second data; and
the forwarding, by the third device, the second data to the second device includes:
   sending, by the third device, the second data to the second device corresponding to the third device according to the sub-flow identifier.

With reference to any one of the first to the third possible implementation manners of the second aspect, in a fourth possible implementation manner of the second aspect, before the receiving, by a third device, second data sent by a first device, the method further includes:
receiving, by the third device, configuration information transmitted from the first device, where the configuration information includes: a logic sub-identifier corresponding to each RB of the third device, and the logic sub-identifier is used to represent that the second data is forwarded on the RB; and
the forwarding, by the third device, the second data to the second device includes:
   forwarding, by the third device on the RB corresponding to the logic sub-identifier, the second data to the second device according to the configuration information.

A third aspect of the embodiments of the present invention provides a data transmission device in a multiple user cooperative communication scenario, including:
a processing module, configured to determine first data and second data from to-be-transmitted data according to link quality of a direct link and link quality of a forwarding link, where the first data is data directly transmitted from a first device to a second device, the second data is data transmitted from the first device to the second device through a third device, the third device is configured to assist in communication between the first device and the second device, the direct link is a link for directly transmitting the first data from the first device to the second device, and the forwarding link is a link for transmitting the second data from the first device to the second device through the third device;
a first transmission module, configured to directly transmit the first data determined by the processing module to the second device; and
a second transmission module, configured to transmit the second data determined by the processing module to the second device through the third device.

In a first possible implementation manner of the third aspect, the processing module is specifically configured to:
determine, from the to-be-transmitted data according to a ratio between data transmission rates of the direct link and the forwarding link, the first data to be transmitted on the direct link and the second data to be transmitted on the forwarding link; and/or
determine, from the to-be-transmitted data according to a volume of data that has not been transmitted on the direct link and a volume of data that has not been transmitted on the forwarding link, the first data to be transmitted on the direct link and the second data to be transmitted on the forwarding link.

With reference to the third aspect or the first possible implementation manner of the third aspect, in a second possible implementation manner of the third aspect, the processing module is further configured to:
after determining the first data and the second data from the to-be-transmitted data, add a first link data packet sequence number to the first data, where the first data packet sequence number is used to identify an unreceived data packet in the first data; and
add a second link data packet sequence number to the second data, where the second link data packet sequence number is used to identify an unreceived data packet in the second data.

With reference to the second possible implementation manner of the third aspect, in a third possible implementation manner of the third aspect, the processing module is further configured to:
after determining the first data and the second data from the to-be-transmitted data, add a sub-flow identifier and a flow sequence number to the second data, where the sub-flow identifier is used to identify the second device corresponding to the second data, and the flow sequence number is used to identify the third device corresponding to the second data.

With reference to the second or the third possible implementation manner of the third aspect, in a fourth possible implementation manner of the third aspect, the processing module is further configured to:
after determining the first data and the second data from the to-be-transmitted data, add a first radio bearer identifier to the first data, where the first radio bearer identifier is used to represent a service to which the first data belongs; and add a second radio bearer identifier to the second data, where the second radio bearer identifier is used to represent a service to which the second data belongs.

With reference to any one of the second to the fourth possible implementation manners of the third aspect, in a fifth possible implementation manner of the third aspect, the first transmission module is further configured to:
after the processing module determines the first data and the second data from the to-be-transmitted data, transmit first configuration information to the second device, where the first configuration information includes: a first logic sub-identifier corresponding to each radio bearer RB of the second device, and the first logic sub-identifier is used to represent that the first data and the second data are transmitted on the RB.

With reference to the fifth possible implementation manner of the third aspect, in a sixth possible implementation manner of the third aspect, the second transmission module is further configured to:
after the processing module determines the first data and the second data from the to-be-transmitted data, transmit second configuration information to the third device, where the second configuration information includes: a second logic sub-identifier corresponding to each RB of the third device, and the second logic sub-identifier is used to represent that the second data is forwarded on the RB.

With reference to any one of the second to the sixth possible implementation manners of the third aspect, in a seventh possible implementation manner of the third aspect, the first transmission module is further configured to:
after directly transmitting the first data to the second device, if a reception acknowledgment for the first data is not received from the second device within a first set time, the first device transmits the first data to the third device, so that the third device forwards the first data to the second device.

With reference to the seventh possible implementation manner of the third aspect, in an eighth possible implementation manner of the third aspect, the second transmission module is further configured to: after transmitting the second data to the second device through the third device, if a reception acknowledgment for the second data is not received from the third device within a second set time, the first device directly transmits the second data to the second device.

A fourth aspect of the embodiments of the present invention provides a data transmission device in a multiple user cooperative communication scenario, where the transmission device is configured to assist in communication between the first device and a second device, and includes:
a receiving module, configured to receive second data transmitted by the first device, where the second data is determined by the first device from to-be-transmitted data according to quality of a direct link and quality of a forwarding link, the direct link is a link for directly transmitting the first data from the first device to the second device, and the forwarding link is a link for transmitting the second data from the first device to the second device through the third device; and
a sending module, configured to forward the second data received by the receiving module to the second device.

In a first possible implementation manner of the fourth aspect, the receiving module is specifically configured to receive the second data that is sent by the first device and includes a second link data packet sequence number;
the device further includes:
a processing module, configured to determine an unreceived data packet sequence number in the second data according to the second link data packet sequence number received by the receiving module; and
the sending module is further configured to request the first device to retransmit a data packet that corresponds to the unreceived data packet sequence number determined by the processing module.

With reference to the first possible implementation manner of the fourth aspect, in a second possible implementation manner of the fourth aspect, the receiving module is specifically configured to receive the second data that carries a second radio bearer identifier, where the second radio bearer identifier is used to represent a service to which the second data belongs; and
the processing module is further configured to: re-encapsulate a first data packet in the second data received by the receiving module into at least one second data packet, where data in each re-encapsulated second data packet has a same second radio bearer identifier received by the receiving module.

With reference to the first or the second possible implementation manner of the fourth aspect, in a third possible implementation manner of the fourth aspect, the receiving module is specifically configured to:
receive the second data that is sent by the first device and carries a flow sequence number and a sub-flow identifier, where the flow sequence number is used to identify the third device corresponding to the second data, and the sub-flow identifier is used to identify the second device corresponding to the second data; and
the sending module is specifically configured to send the second data to the second device corresponding to the third device according to the sub-flow identifier received by the receiving module.

With reference to any one of the first to the third possible implementation manners of the fourth aspect, in a fourth possible implementation manner of the fourth aspect, the receiving module is further configured to:
receive configuration information transmitted from the first device, where the configuration information includes: a logic sub-identifier corresponding to each RB of the device, and the logic sub-identifier is used to represent that the second data is forwarded on the RB; and
the sending module is specifically configured to forward, on the RB corresponding to the logic sub-identifier, the second data to the second device according to the configuration information received by the receiving module.

A fifth aspect of the embodiments of the present invention provides a data transmission device in a multiple user cooperative communication scenario, including:
a first receiving module, configured to receive first data sent by a first device, where the first data is determined by the first device from to-be-transmitted data according to quality of a direct link and quality of a forwarding link, the direct link is a link for directly transmitting the first data from the first device to a second device, the forwarding link is a link for transmitting the second data from the first device to the second device through a third device, and the third device is configured to assist in communication between the first device and the second device; and
a second receiving module, configured to receive the second data forwarded by the third device.

In a first possible implementation manner of the fifth aspect, the first receiving module is specifically configured to receive the first data that carries a first link data packet sequence number; and
the device further includes:
a processing module, configured to determine an unreceived data packet sequence number in the first data according to the first link data packet sequence number received by the first receiving module; and
a sending module, configured to request the first device to retransmit data that corresponds to the unreceived data packet sequence number determined by the processing module.

With reference to the first possible implementation manner of the fifth aspect, in a second possible implementation manner of the fifth aspect, the second receiving module is specifically configured to receive the second data that carries a second link data packet sequence number;
the processing module is further configured to determine an unreceived data packet sequence number in the second data according to the second link data packet sequence number received by the second receiving module; and
the sending module is further configured to request the third device to retransmit data that corresponds to the unreceived data packet sequence number determined by the processing module.

With reference to the second possible implementation manner of the fifth aspect, in a third possible implementation manner of the fifth aspect, the first data received by the first receiving module includes a first radio bearer identifier, where the first radio bearer identifier is used to identify a service to which the first data belongs; and
the second data received by the second receiving module includes a second radio bearer identifier, where the second radio bearer identifier is used to identify a service to which the second data belongs.

With reference to the second or the third possible implementation manner of the fifth aspect, in a fourth possible implementation manner of the fifth aspect, the second receiving module is specifically configured to receive the second data that is sent by the third device and carries a sub-flow identifier and a flow sequence number, where the sub-flow identifier is used to identify the second device corresponding to the second data, and the flow sequence number is used to identify the third device corresponding to the second data.

With reference to any one of the second to the fourth possible implementation manners of the fifth aspect, in a fifth possible implementation manner of the fifth aspect, the first receiving module is further configured to: before receiving the first data sent by the first device, receive configuration information sent by the first device, where the configuration information includes: a logic sub-identifier corresponding to each radio bearer RB of the second device, and the first logic sub-identifier is used to represent that the first data and the second data are transmitted on the RB;
the first receiving module is specifically configured to receive, on the RB that corresponds to the logic sub-identifier and is used to receive the first data, the first data according to the configuration information; and
the second receiving module is specifically configured to receive, on the RB that corresponds to the logic sub-identifier and is used to receive the second data, the second data according to the configuration information.

A sixth aspect of the embodiments of the present invention provides a data transmission system in a multiple user cooperative communication scenario, including: the first device described above, the second device described above, and the third device described above, where the third device is configured to assist in communication between the first device and the second device.

According to the data transmission method, apparatus, and system in a multiple user cooperative communication scenario provided by the embodiments of the present invention, the first device determines first data and second data from to-be-transmitted data according to link quality of a direct link and link quality of a forwarding link, where the first data is data directly transmitted from the first device to a second device, the second data is data transmitted from the first device to the second device through a third device, the third device is configured to assist in communication between the first device and the second device, the direct link is a link for directly transmitting the first data from the first device to the second device, and the forwarding link is a link for transmitting the second data from the first device to the second device through the third device; the first device directly transmits the first data to the second device; and the first device transmits the second data to the second device through the third device, so that the to-be-transmitted data is split from a benefited UE side to the direct link and the forwarding link, and is separately transmitted to the base station. When data is split to the direct link and the forwarding link, the link quality of the direct link and the link quality of the forwarding link are fully considered; therefore, resources of the direct link and the forwarding link can be used more properly, so that a data transmission throughput can be improved in the multiple user cooperative communication scenario.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of an embodiment of a data transmission method in a multiple user cooperative communication scenario according to the present invention;
FIG. 2 is another flowchart of an embodiment of a data transmission method in a multiple user cooperative communication scenario according to the present invention;
FIG. 3 is a schematic diagram of a protocol stack of a base station, benefited UE, and supporting UE in a data transmission method in a multiple user cooperative communication scenario according to the present invention;
FIG. 4a is a schematic functional diagram of an e-RLC entity, in an AM mode, of a transmit end in an embodiment of a data transmission method in a multiple user cooperative communication scenario according to the present invention;
FIG. 4b is a schematic functional diagram of an e-RLC entity, in a UM mode, of a transmit end in another embodiment of a data transmission method in a multiple user cooperative communication scenario according to the present invention;
FIG. 5 is a schematic functional diagram of an MUCC entity of a transmit end and an MUCC entity of a receive end in another embodiment of a data transmission method in a multiple user cooperative communication scenario according to the present invention;
FIG. 6 is a schematic functional diagram of an MUCC entity of a receive end or supporting UE in another embodiment of a data transmission method in a multiple user cooperative communication scenario according to the present invention;
FIG. 7 is a schematic diagram of a split-flow header in an embodiment of a data transmission method in a multiple user cooperative communication scenario according to the present invention;
FIG. 8a is a schematic functional diagram of an MUCC entity of supporting UE on a downlink in another embodiment of a data transmission method in a multiple user cooperative communication scenario according to the present invention;
FIG 8b is a schematic functional diagram of an MUCC entity of supporting UE on an uplink in another embodiment of a data transmission method in a multiple user cooperative communication scenario according to the present invention;
FIG. 9 is a schematic structural diagram of an embodiment of a data transmission device in a multiple user cooperative communication scenario according to the present invention;
FIG. 10 is a schematic structural diagram of another embodiment of a data transmission device in a multiple user cooperative communication scenario according to the present invention;
FIG. 11 is a schematic structural diagram of still another embodiment of a data transmission device in a multiple user cooperative communication scenario according to the present invention;
FIG. 12 is a schematic structural diagram of still another embodiment of a data transmission device in a multiple user cooperative communication scenario according to the present invention;
FIG. 13 is a schematic structural diagram of another data transmission device in a multiple user cooperative communication scenario according to the present invention;
FIG 14 is a schematic structural diagram of another data transmission device in a multiple user cooperative communication scenario according to the present invention;
FIG 15 provides a schematic structural diagram of another data transmission device in another multiple user cooperative communication scenario; and
FIG 16 provides a schematic structural diagram of still another data transmission device in a multiple user cooperative communication scenario.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

By using an example in which a cellular technology is network system architecture evolution (System Architecture Evolution, SAE) or LTE and a short-range communications technology is WiFi, in a scenario in which multiple users in a single network node perform cooperative communication, or in an MUCC scenario, when at least two UEs can all support both WiFi and LTE, in order to increase reliability and a throughput, an MUCC relationship may be established between the at least two UEs, that is, when one UE in the at least two UEs needs to send or receive data, another UE except the one UE may provide support and assist the one UE in performing communication. In the present invention, the one UE is named benefited UE, served UE or assisted UE, and the another UE except the one UE is named supporting UE, serving UE or assisting UE. Naming of the foregoing UEs is merely an example of the present invention, and naming of UEs in the present invention includes but is not limited to the foregoing naming example.

In this embodiment of the present invention, UE that cannot directly transmit data with a base station is named benefited UE, and another UE except this UE and capable of assisting in communication between this UE and the base station is named supporting UE. From a cellular perspective, the benefited UE is an initial sender of uplink data, or a final receiver of downlink data.

Concepts of the benefited UE and the supporting UE are derived from a perspective of a bearer of the benefited UE. For example, UE1 and UE2 form MUCC and can assist each other in communication. In this way, from a perspective of a bearer of the UE1, the UE2 can support the bearer of the UE1, so that the UE1 is benefited UE and the UE2 is supporting UE. In addition, the UE1 can also support a bearer of the UE2. Therefore, from a perspective of the bearer of the UE2, the UE2 is benefited UE and the UE1 is supporting UE. That is, for a bearer, generally, there is only one benefited UE, and the supporting UE is UE that is used to assist the benefited UE in performing data relay; and for a bearer of the benefited UE, there may be multiple supporting UEs.

When the foregoing UEs are in a same short-distance connection range, if a base station on a network side needs to send downlink data to one benefited UE, the base station may split the downlink data, so as to send some of the downlink data to the benefited UE directly, and the rest of the downlink data to supporting UE, and the supporting UE receiving the data then sends the data to the benefited UE by means of short-range communications (such as Wireless Fidelity (Wireless-Fidelity, WiFi for short) or Bluetooth). The benefited UE combines the data that is directly received from the base station with the data forwarded by the supporting UE. Similarly, if one benefited UE needs to send uplink data to the base station, the benefited UE may split the uplink data, so as to send some of the uplink data to the base station directly, and send the rest of the uplink data to supporting UE, and the supporting UE forwards the received uplink data to the base station. The base station combines the data forwarded by the supporting UE with the data directly sent by the benefited UE, thereby completing cooperative communication between the UEs. Cooperative transmission by using the supporting UE for communication between the benefited UE and the base station may increase reliability and a throughput of communication of the benefited UE.

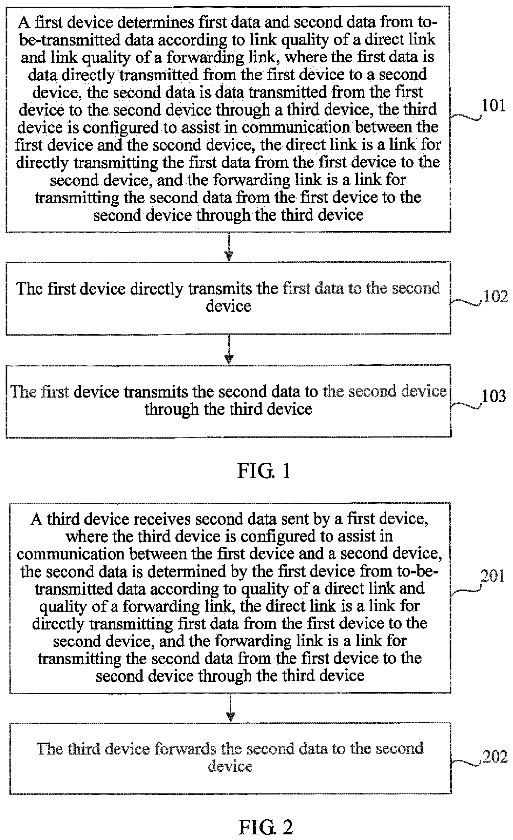

FIG. 1 is a flowchart of a data transmission method in a multiple user cooperative communication scenario according to the present invention. As shown in FIG. 1, the method of this embodiment may include:
Step 101: A first device determines first data and second data from to-be-transmitted data according to link quality of a direct link and link quality of a forwarding link, where the first data is data directly transmitted from the first device to a second device, the second data is data transmitted from the first device to the second device through a third device, the third device is configured to assist in communication between the first device and the second device, the direct link is a link for directly transmitting the first data from the first device to the second device, and the forwarding link is a link for transmitting the second data from the first device to the second device through the third device.
Step 102: The first device directly transmits the first data to the second device.
Step 103: The first device transmits the second data to the second device through the third device.

For downlink data transmission in the multiple user cooperative communication scenario, the first device may be a base station, the second device may be benefited UE, and the third device may be supporting UE; for uplink data transmission in the multiple user cooperative communication scenario, the first device may be benefited UE, the second device may be a base station, and the third device may be supporting UE. That is, the first device is a data sender, the second device is a data receiver, and the third device is configured to assist in communication between the first device and the second device.

The link quality may be a data transmission rate of a link, a volume of data that has not been transmitted on the link, or the like; the foregoing description is merely an example of the present invention, and the link quality includes, but is not limited to, the foregoing description. That is, the first device may determine, based on the link quality of the direct link and the link quality of the forwarding link, which data in the to-be-transmitted data is transmitted by using the direct link, and which data is transmitted by using the forwarding link. It should be noted that, the direct link is a link that can be used for directly transmitting data from the first device to the second device, and the forwarding link is a link that can be used for forwarding data from the first device to the second device with the assistance of the third device. Because the third device can be used to assist in communication between the first device and the second device, there may be at least one third device, and therefore, there may also be at least one forwarding link.

Specifically, the first device determines, from the to-be-transmitted data according to a ratio between data transmission rates of the direct link and the forwarding link, the first data to be transmitted on the direct link and the second data to be transmitted on the forwarding link. For example, in one scenario, if the data transmission rate of the direct link is less than the rate of the forwarding link, the first device may determine the first data and the second data from the to-be-transmitted data according to the data transmission rates, where a data volume of the first data is less than a data volume of the second data, that is, the second data with a greater data volume is transmitted by using the forwarding link, and the first data with a less data volume is transmitted by using the direct link; and vice versa, and details are not described again.

Specifically, in a case in which the data transmission rate of the direct link is extremely low, the first device may even transmit all of the to-be-transmitted data by using the forwarding link; and similarly, in a case in which the data transmission rate of the forwarding link is extremely low, the first device may even directly send all of the to-be-transmitted data to the benefited UE by using the direct link.

Specifically, the first device may also allocate, by using a particular algorithm, a ratio between the first data and the second data in the to-be-transmitted data according to an actual throughput requirement of a system and an actual ratio between rates of the direct link and the forwarding link.

Specifically, the first device may also determine, from the to-be-transmitted data according to a volume of data that has not been transmitted on the direct link and a volume of data that has not been transmitted on the forwarding link, the first data to be transmitted on the direct link and the second data to be transmitted on the forwarding link. For example, in one scenario, if the volume of data that has not been transmitted on the direct link is less than the volume of data that has not been transmitted on the forwarding link, the first device may determine, from the to-be-transmitted data, that the first data with a greater data volume is transmitted by using the direct link, and that the second data with a less data volume is transmitted by using the forwarding link, so as to improve a downlink data transmission throughput. In another scenario, if the volume of data that has not been transmitted on the direct link is equivalent to the volume of data that has not been transmitted on the forwarding link, the first device may determine that a data volume of the first data and a data volume of the second data are equal or close, so as to improve a downlink data transmission throughput. In still another scenario, assuming that the volume of data that has not been transmitted on the direct link is greater than the volume of data that has not been transmitted on the forwarding link, the first device may determine that a data volume of the first data is less than a data volume of the second data, and therefore, the second data with a greater data volume is transmitted by using the forwarding link, and the first data with a less data volume is transmitted by using the direct link.

Specifically, in a case in which the volume of data that has not been transmitted on the direct link is extremely large, the first device may even transmit all of the to-be-transmitted data by using the forwarding link; and similarly, in a case in which the volume of data that has not been transmitted on the forwarding link is extremely large, the first device may even directly transmit all of the to-be-transmitted data to the second device by using the direct link.

Specifically, the first device may allocate, by using a particular algorithm, a ratio between the first data and the second data in the to-be-transmitted data according to an actual throughput requirement of the system and actual volumes of data that has not been transmitted on the direct link and the forwarding link.

Specifically, the first device may further determine, by comprehensively considering the ratio between the data transmission rates of the direct link and the forwarding link, and the volume of data that has not been transmitted on the direct link and the volume of data that has not been transmitted on the forwarding link, which data in the to-be-transmitted data is to be directly sent to the second device by using the direct link, and which data is to be transmitted to the second device by using the forwarding link and with the assistance of the third device. For example, the first device may set weight values for the rate ratio and for the volume of data that has not been transmitted. For example, it may be set that the data transmission rate is a primary factor to be considered, and that the volume of data that has not been transmitted is an auxiliary factor to be considered. On the contrary, it may also set that the volume of data that has not been transmitted is a primary factor to be considered, and that the ratio between the data transmission rates is an auxiliary factor to be considered. The first device may also determine, by using a particular algorithm and setting weights for the ratio between the data transmission rates and for the volume of data has not been transmitted, a ratio between the first data and the second data in the to-be-transmitted data according to an actual throughput requirement of the system.

Certainly, the foregoing method for determining the first data and the second data is merely an example of the present invention, and a manner for splitting the to-be-transmitted data in the present invention includes, but is not limited to, the solution mentioned above.

Further, to improve reliability of downlink data transmission, this embodiment of the present invention further provides a retransmission mechanism:

Specifically, the first device may add a first link data packet sequence number to the first data, where the first link data packet sequence number is used to identify an unreceived data packet in the first data, so that the second device can determine the unreceived data packet in the first data according to the received first link data packet sequence number, so as to request the base station to retransmit the unreceived data packet in the first data. Similarly, the first device may also add a second link data packet sequence number to the second data, where the second link data packet sequence number is used to identify an unreceived data packet in the second data, so that the third device can determine the unreceived data packet in the second data according to the received second link data packet sequence number, so as to request the first device to retransmit the unreceived data packet in the second data.

Further, because one second device may correspond to multiple third devices, and one third device may also correspond to multiple second devices, to distinguish a correspondence between second devices and third devices, the first device may further add a sub-flow identifier and a flow sequence number to the second data, where the sub-flow identifier is used to identify the second device corresponding to the second data, and the flow sequence number is used to identify the third device corresponding to the second data. In this way, the first device can send, according to the sub-flow identifier, the second data to the third device indicated by the sub-flow identifier, and the third device identifies, according to the flow sequence number, the second device corresponding to the third device.

In addition, data transmitted between the first device and the second device may include multiple types of services; therefore, the first device may further add a first radio bearer identifier to the first data, where the first radio bearer identifier is used to represent a service to which the first data belongs; and similarly, the first device may also add a second radio bearer identifier to the second data, where the second radio bearer identifier is used to represent a service to which the second data belongs.

Further, when the first device determines the first data and the second data from the to-be-transmitted data according to the link quality of the direct link and the link quality of the forwarding link, a situation in which direct transmission of the first data from the first device to the second device fails, or transmission of the second data from the first device to the second device through the third device fails may occur. Therefore, to further improve reliability of downlink data transmission, the present invention provides the following solution:

After the first device directly transmits the first data to the second device, if a reception acknowledgment for the first data is not received in a first set time, the first device may retransmit the first data to the second device through the third device. Similarly, after the first device transmits the second data to the second device through the third device, if a reception acknowledgment for the second data is not received within a second set time, the first device retransmits the second data to the second device.

Further, because the second device and the third device each may correspond to multiple bearers, the base station may pre-configure which bearers are used to transmit the first data and which bearers are used to transmit the second data. A description is provided by using an example in which the first device is a base station, the second device is benefited UE, and the third device is supporting UE. The base station sends first configuration information to the benefited UE, where the first configuration information includes: a first logic sub-identifier corresponding to each radio bearer (Radio Bearer, RB for short) of the benefited UE, and the first logic sub-identifier is used to represent that the first data and the second data are transmitted on the RB. The base station may send second configuration information to the supporting UE, where the second configuration information includes: a second logic sub-identifier corresponding to each RB of the supporting UE, and the second logic sub-identifier is used to represent that the second data is forwarded on the RB.

For example, by using downlink data transmission as an example: two RBs of the benefited UE is a DRB1 (data service bearer (Data Radio Bearer, DRB)) and a DRB2; in this case, in the first configuration information, a first logic sub-identifier list corresponding to the DRB1 is 000 and 001, where 000 is used to represent that the first data that is directly sent by the base station by using the direct link is received on the RB, and 001 is used to identify that the second data forwarded by the supporting UE is received on the RB. In the first configuration information, a first logic sub-identifier list corresponding to the DRB2 is 000 and 003, where 000 is used to represent that the first data that is directly sent by the base station by using the direct link is received on the RB, and 003 is used to represent that the second data forwarded by the supporting UE is received on the RB. In addition, the first configuration information may further carry information such as a quadrature channel interference (Quadrature Channel Interference, QCI for short) level corresponding to each RB of the benefited UE.

In the data transmission method in a multiple user cooperative communication scenario provided by this embodiment of the present invention, a first device determines first data and second data from to-be-transmitted data according to link quality of a direct link and link quality of a forwarding link, where the first data is data directly transmitted from the first device to a second device, the second data is data transmitted from the first device to the second device through a third device, the third device is configured to assist in communication between the first device and the second device, the direct link is a link for directly transmitting the first data from the first device to the second device, and the forwarding link is a link for transmitting the second data from the first device to the second device through the third device; the first device directly transmits the first data to the second device; and the first device transmits the second data to the second device through the third device. Because a manner of splitting data to the direct link and the forwarding link is used, and data transmission is performed by fully considering the link quality of the direct link and the link quality of the forwarding link, resources of the direct link and the forwarding link can be used more properly, and therefore, a data transmission throughput can be improved in the multiple user cooperative communication scenario.

FIG. 2 is another flowchart of an embodiment of a data transmission method in a multiple user cooperative communication scenario according to the present invention. As shown in FIG. 2, the method of this embodiment may include:
Step 201: A third device receives second data sent by a first device, where the third device is configured to assist in communication between the first device and a second device, the second data is determined by the first device from to-be-transmitted data according to quality of a direct link and quality of a forwarding link, the direct link may be a link for directly transmitting first data from the first device to the second device, and the forwarding link may be a link for transmitting the second data from the first device to the second device through the third device.
Step 202: The third device forwards the second data to the second device.

The third device is configured to assist in communication between the first device and the second device, that is, the third device is supporting UE. For downlink data transmission in the multiple user cooperative communication scenario, the first device may be a base station, the second device may be benefited UE; for uplink data transmission in the multiple user cooperative communication scenario, the first device may be benefited UE, and the second device may be a base station.

The first device is a data sender, the second device is a data receiver, and the third device is configured to assist in communication between the first device and the second device. The first device determines the first data and the second data from the to-be-transmitted data according to the link quality of the direct link and the link quality of the forwarding link; moreover, the first data is directly transmitted from the first data to the second data by using the direct link, and the second data is transmitted from the first device to the second device by using the forwarding link and with the assistance of the third device.

To improve reliability of data transmission, the second data may further include a second link data packet sequence number, and in this case, the third device may determine an unreceived data packet sequence number in the second data according to the received second link data packet sequence number, and request the first device to retransmit a data packet that corresponds to the unreceived data packet sequence number.

Further, the second data may further include a second radio bearer identifier, where the second radio bearer identifier may be used to represent a service to which the second data belongs, and in this case, after receiving the second data sent by the first device, the third device may further re-encapsulate the second data. Assuming an original data packet in the second data is a first data packet, because the second data may include multiple types of services, and each type of service has a different second bearer identifier, the third device may perform re-encapsulation according to the bearer identifiers, so that data in each second data packet after the re-encapsulation has a same second radio bearer identifier.

Further, because one third device may correspond to multiple second devices, and one second device may also correspond to multiple third devices, in this scenario, the second data sent by the first device and received by the third device may further carry a flow sequence number and a sub-flow identifier, where the flow sequence number may be used to identify the third device corresponding to the second data, and the sub-flow identifier may be used to identify the second device corresponding to the second data. The third device may determine, according to the sub-flow identifier, which second device the second data should be transmitted to.

Further, because each third device may correspond to multiple bearers, the first device may pre-configure, for the third device, which bearers are used to forward the second data. Specifically, the third device may receive configuration information sent by the first device, where the configuration information includes: a logic sub-identifier corresponding to each RB of the third device, and the logic sub-identifier is used to represent that the second data is forwarded on the RB; and the third device may forward, on the RB corresponding to the logic sub-identifier, the second data to the second device according to the configuration information.

In the data transmission method in a multiple user cooperative communication scenario provided by this embodiment of the present invention, a first device determines first data and second data from to-be-transmitted data according to link quality of a direct link and link quality of a forwarding link, where the first data is data directly transmitted from the first device to a second device, the second data is data transmitted from the first device to the second device through a third device, the third device is configured to assist in communication between the first device and the second device, the direct link is a link for directly transmitting the first data from the first device to the second device, and the forwarding link is a link for transmitting the second data from the first device to the second device through the third device; the first device directly transmits the first data to the second device; and the first device transmits the second data to the second device through the third device. When data is split to the direct link and the forwarding link, the link quality of the direct link and the link quality of the forwarding link are fully considered; therefore, resources of the direct link and the forwarding link can be used more properly, so that a downlink data transmission throughput can be improved in the multiple user cooperative communication scenario.

As a specific implementation manner, a base station, benefited UE, and supporting UE may separately establish a respective layer 2 entity. The layer 2 entity refers to a logic entity in the base station, the benefited UE, or the supporting UE, and functions of the layer 2 entity may be implemented by using software, hardware, or a combination of software and hardware.

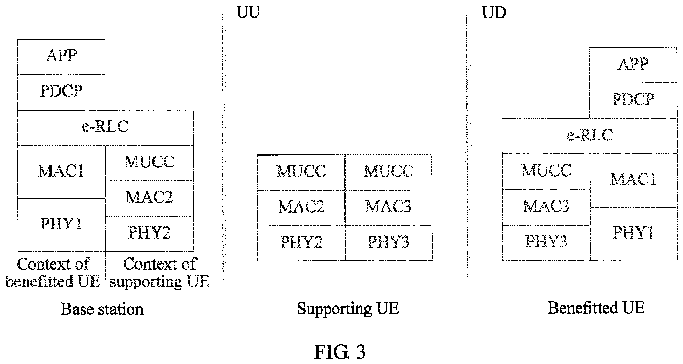

The layer 2 entity specifically includes: an enhanced Radio Link Control layer protocol (enhance Radio Link Control, e-RLC for short) entity, an MUCC entity, and a Medium Access Control layer protocol (Medium Access Control, MAC for short) entity. On the base station, an e-RLC entity and a MAC entity need to be established for the benefited UE, and an MUCC entity and a MAC entity need to be established for the supporting UE. An interface exists between the MUCC entity of the supporting UE and the e-RLC of the benefited UE, that is, the e-RLC entity of the benefited UE requests the MUCC entity of the supporting UE to send data, and also receives data forwarded by the MUCC entity of the supporting UE. As a specific implementation manner, in the present invention, the MUCC entity may be located below the RLC entity and above the MAC entity, as shown in FIG. 3.

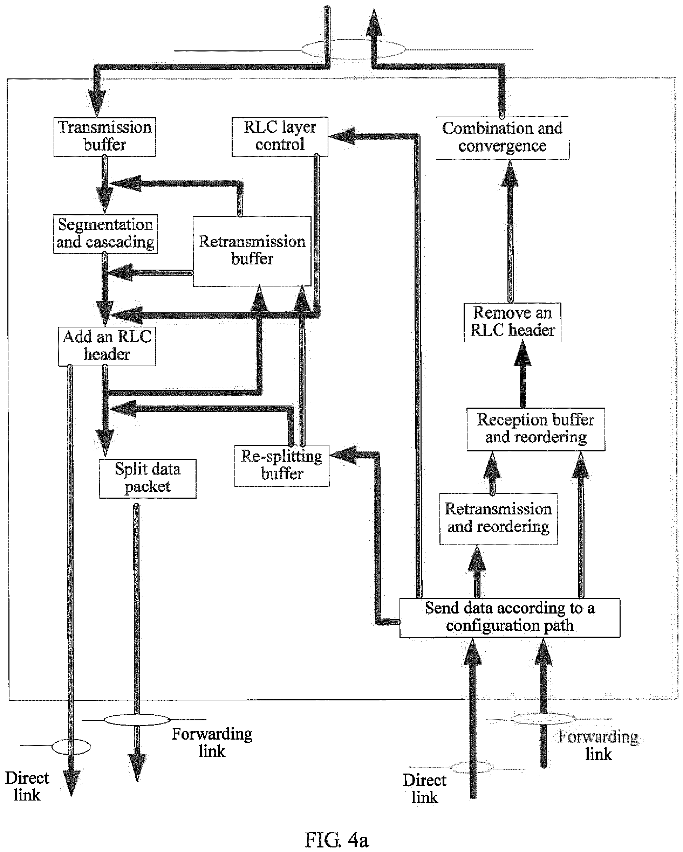

FIG. 4a is a schematic functional diagram of an e-RLC entity, in an AM mode, of a transmit end in an embodiment of a data transmission method in a multiple user cooperative communication scenario according to the present invention. As shown in FIG. 4a, in a protocol stack between a base station and benefited UE when an e-RLC entity at a transmit end in an embodiment of a data transmission method in a multiple user cooperative communication scenario provided by the present invention is in an acknowledge mode (Acknowledge Mode, AM for short) mode, a splitting function and a combination function are added based on an existing LTE RCL layer. Specifically, the transmit end of data has the splitting function, that is, a function of splitting to-be-transmitted data into first data and second data; and a receive end has the combination function, that is, a function of combining the first data received from a direct link and the second data received from a forwarding link.

Splitting function: For downlink transmission, the splitting operation is implemented by an e-RLC on a base station side, and for uplink transmission, the splitting operation is implemented by an e-RLC on a benefited UE side.

By using downlink data transmission as an example, after to-be-transmitted downlink data on the base station side reaches the e-RLC entity, the base station may split the to-be-transmitted downlink data into first data and second data according to link quality of the direct link and link quality of the forwarding link. The first data is sent by using a direct path between the base station and the benefited UE, and the second data is forwarded to the benefited UE with the assistance of supporting UE. Specifically, the first data that is sent by using the direct path between the base station and the benefited UE is sent to a MAC entity of the benefited UE after the e-RLC entity adds an RLC header to the first data. The second data that is forwarded by using a forwarding path is sent to an MUCC entity of the supporting UE after the e-RLC entity adds an RLC header to the second data.

Re-splitting function: Still by using downlink data transmission as an example, after the first data is sent, if the e-RLC entity of the base station does not receive, from the benefited UE within a first set time, a reception acknowledgment for the first data, the base station may re-split the first data, that is, re-define a transmission path of the first data; optionally, the base station may send the first data to the supporting UE, and the supporting UE forwards the first data to the benefited UE. Similarly, after the second data is sent, if the e-RLC entity of the base station does not receive, from the supporting UE within a second set time, a reception acknowledgment for the second data, the base station may also re-define a transmission path of the second data, and optionally, the base station may directly send the second data to the benefited UE. It should be noted that, the re-splitting may require re-segmentation of data packets, and specifically, RLC header information may need to be modified; for a modification method, reference may be made to an existing method for processing RLC header information by an RLC layer.

Convergence function: For downlink transmission, a convergence operation is implemented on the benefited UE side, and for uplink transmission, the convergence operation is implemented on the base station side. By using downlink transmission as an example, after the first data transmitted on the direct link and the second data transmitted on the forwarding link reach the benefited UE, the benefited UE may reorder, at the e-RLC entity, the first data and the second data that are correctly received, so as to arrange out-of-order data packets in order.

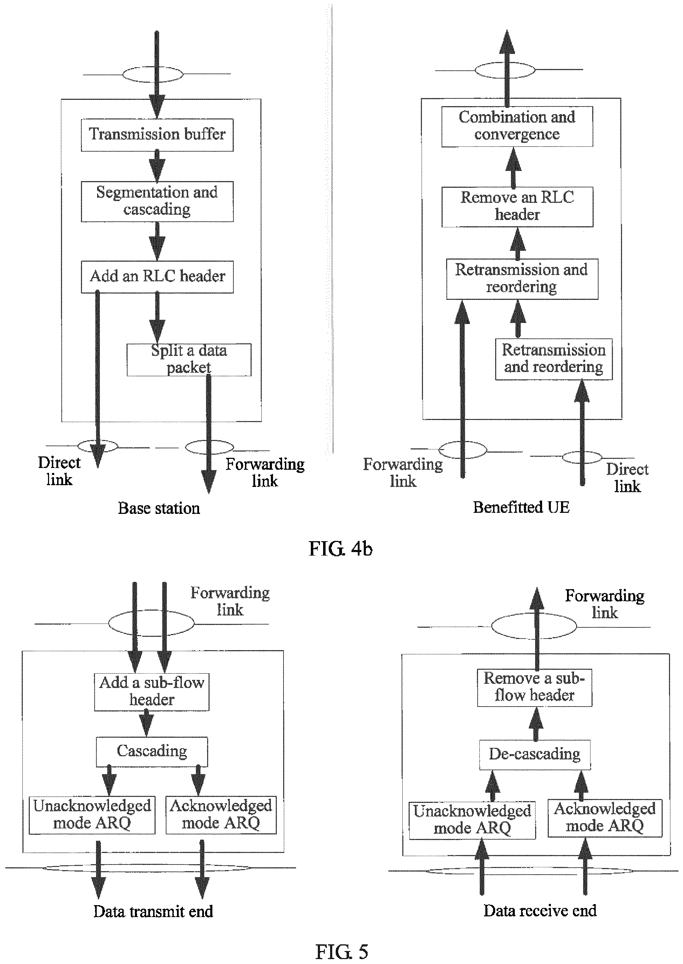

FIG. 4b is a schematic functional diagram of an e-RLC entity, in a UM mode, of a transmit end in an embodiment of a data transmission method in a multiple user cooperative communication scenario according to the present invention. As shown in FIG. 4b, when an e-RLC entity at a transmit end in another embodiment of a data transmission method in a multiple user cooperative communication scenario provided by the present invention is in an unacknowledged mode (Unacknowledged Mode, UM for short) mode, a difference from the AM mode lies in that, in the AM mode, after correctly receiving the first data sent by the transmit end, the receive end notifies the transmit end, to ensure correct reception of the first data; and similarly, after correctly receiving the second data sent by the transmit end, the supporting UE notifies the transmit end, to ensure correct reception of the second data. However, in the UM mode, after correctly receiving the first data, the receive end does not notify the transmit end, and similarly, after correctly receiving the second data, the supporting UE does not notify the transmit end either.

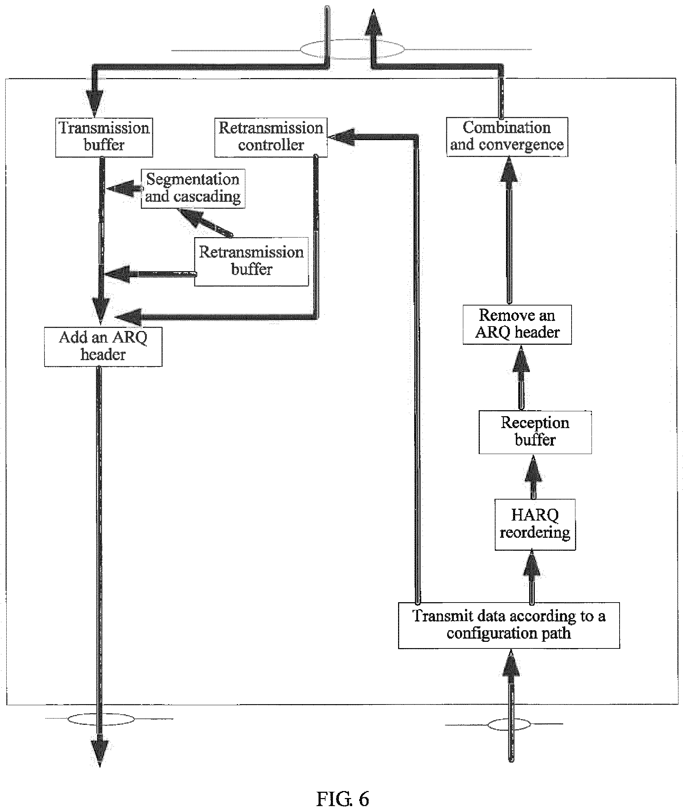

FIG. 5 is a schematic functional diagram of an MUCC entity of a transmit end and an MUCC entity of a receive end in another embodiment of a data transmission method in a multiple user cooperative communication scenario according to the present invention. FIG 6 is a schematic functional diagram of an MUCC entity of a receive end or supporting UE in another embodiment of a data transmission method in a multiple user cooperative communication scenario according to the present invention. The MUCC entity is an entity that exists in each of a base station, benefited UE, and supporting UE. Because one benefited UE may correspond to multiple supporting UEs, and one supporting UE may also correspond to multiple benefited UEs, for the transmit end, for example, a base station side in downlink transmission and benefited UE in uplink transmission, a split-flow header may be added on the transmit end, where the split-flow header may include a sub-flow identifier and a flow sequence number, the sub-flow identifier is used to identify benefited UE corresponding to second data that is forwarded by using a forwarding link, and the flow sequence number is used to identify supporting UE corresponding to the benefited UE.

After receiving the second data, the supporting UE may determine the corresponding benefited UE according to the sub-flow identifier in header information, so as to send the second data to the corresponding benefited UE.

The receive end, for example, the benefited UE in downlink transmission and the base station in uplink transmission, may remove the split-flow header, and send, according to the flow sequence number in the header, the second data to an e-RLC entity corresponding to the supporting UE.

Further, no matter in uplink transmission or downlink transmission, one same benefited UE may be involved in multiple types of concurrent services. Therefore, the transmit end may further add a first radio bearer identifier to a split-flow header of first data, to identify a service to which the first data belongs; and similarly, the transmit end may add a second radio bearer identifier to a split-flow header of the second data, to identify a service to which the second data belongs.

Further, to improve reliability of data transmission, on the transmit end, for example, at an automatic repeat request (Automatic Repeat reQuest, ARQ for short) sub-layer in the MUCC entity on the base station side in downlink transmission, or at a data management channel automatic repeat request (Data Management Channel Automatic Repeat reQuest, DMC ARQ for short) sub-layer in the MUCC entity of the benefited UE in uplink transmission, a first link data packet sequence number may be added to the first data, where the first data packet sequence number is used to identify an unreceived data packet in the first data; similarly, a second link data packet sequence number may be added to the second data, where the second link data packet sequence number is used to identify an unreceived data packet in the second data. In this way, the receive end, for example, the benefited UE in downlink transmission or the base station in uplink transmission, can determine the unreceived data packet in the first data according to the first link data packet sequence number, so as to request the transmit end to perform retransmission. The supporting UE can determine, according to the second link data packet sequence number, the unreceived data packet in the second data, so as to request the transmit end to perform retransmission.

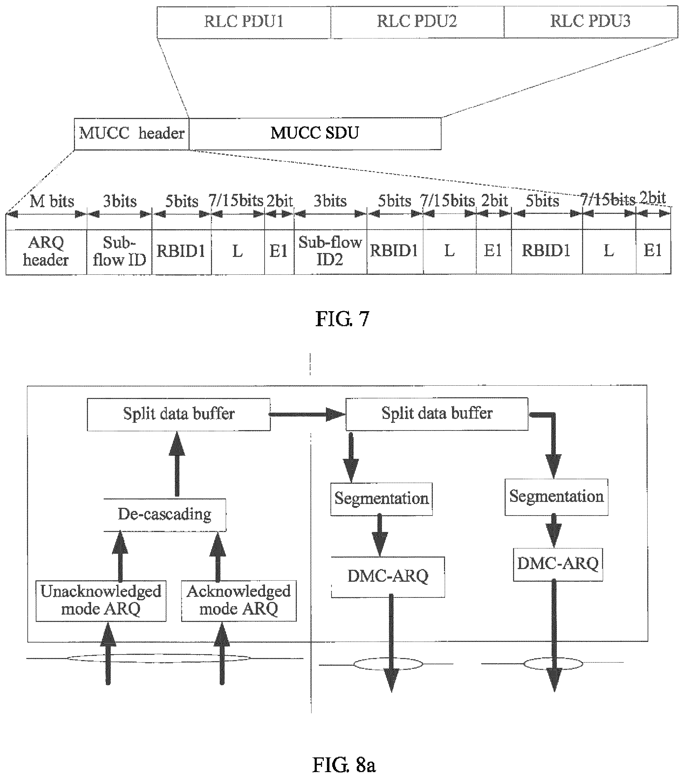

According to the foregoing description, FIG. 7 is a schematic diagram of a split-flow header in an embodiment of a data transmission method in a multiple user cooperative communication scenario according to the present invention, and as shown in FIG. 7, the provided split-flow header may include:

Sub-flow ID: The sub-flow ID represents a sub-flow identifier, where each benefited UE has at least one sub-flow identifier. When a base station configures supporting UE to perform forwarding according to each RB, an RB may be distinguished by using a combination of a sub-flow identifier and a radio bearer identifier.

RBID: The RBID represents a radio bearer identifier. In a case in which benefited UE has multiple concurrent services, different services may be distinguished from each other by using RBIDs.

L: L represents a length of a data packet that reaches an e-RLC.

FIG. 8a is a schematic functional diagram of an MUCC entity of supporting UE on a downlink in another embodiment of a data transmission method in a multiple user cooperative communication scenario according to the present invention.

ARQ function: In an AM mode, a receiver window may be set on supporting UE, to feed back a receiving state to a transmit end, and request the transmit end to retransmit a data packet that is not received, while in a UM mode, the receiving state is not returned to the transmit end.

De-cascading: Further, one supporting UE may correspond to multiple benefited UEs, while for downlink transmission, a base station side may deliver data packets of multiple benefited UEs to the supporting UE by using one link; therefore, the supporting UE needs to perform de-cascading. Specifically, a base station may add a sub-flow identifier to second data, where the sub-flow identifier is used to identify a second device corresponding to the second data; therefore, the supporting UE may distribute, according to the sub-flow identifier, the second data to a buffer (buffer) corresponding to each benefited UE.

Forwarding buffer: The forwarding buffer is configured to store the second data received from the base station, where a storage manner may be separately storing data according to different benefited UEs.

Distribution function: The supporting UE sends, according to the sub-flow identifier, the second data to a link between the supporting UE and the corresponding benefited UE. It should be noted that, the supporting UE may perform forwarding based on services; the base station may send data of a same service to a DMC-ARQ entity of the supporting UE in a cascaded manner, that is, one data packet includes only the data of this service. Alternatively, if the supporting UE may further perform forwarding according to different benefited UEs, the base station may further send data of one same benefited UE to the supporting UE in a cascaded manner, that is, one data packet includes only data of one benefited UE, while the data packet may include data of one or more types of services of the benefited UE.

DMC-ARQ function: The supporting UE may add, to the second data, a link data packet sequence number SN of the second data transmitted between the benefited UE and the supporting UE, so that the benefited UE can determine an unreceived data packet in the second data according to the link data packet sequence number SN, and request the supporting UE to perform retransmission, thereby improving reliability of the link between the supporting UE and the benefited UE.

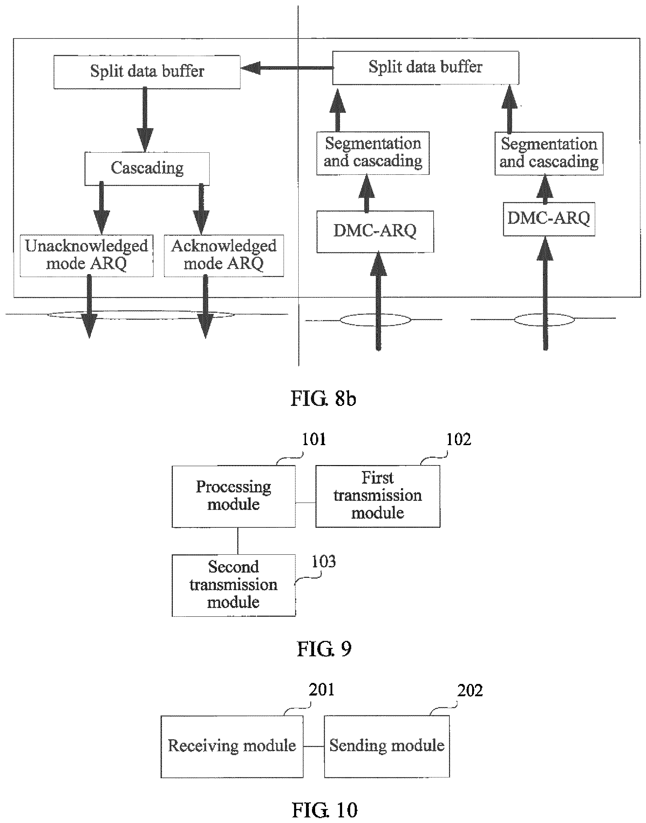

FIG. 8b is a schematic functional diagram of an MUCC entity of supporting UE on an uplink in another embodiment of a data transmission method in a multiple user cooperative communication scenario according to the present invention.

DMC-ARQ entity: Benefited UE may add a link data packet sequence number SN of second data transmitted between supporting UE and the benefited UE; the supporting UE may determine an unreceived data packet in the second data according to the link data packet sequence number SN, and request the benefited UE to perform retransmission, thereby improving reliability of direct link transmission between the benefited UE and the supporting UE.

Forwarding buffer: The forwarding buffer stores the second data received from the benefited UE, where a storage manner may be separately storing data according to different benefited UEs, or further, the storage manner may be storing data according to different services of different benefited UEs.

Uplink data of multiple benefited UEs may need to be cascaded or segmented, which depends on a data packet size on a DMC link of the supporting UE and a data packet transmission capability of a Uu interface. In a case in which a DMC data packet is very small, data of multiple benefited UEs may be cascaded, that is, data of multiple benefited UEs is put in one data packet and forwarded; in a case in which a DMC data packet is very small, the second data may be transmitted in a segmented manner according to a Uu transmission capability, and data of different benefited UEs may be put in different data packets for transmission.

It should be noted that, on a transmit end, to-be-transmitted data that needs to be processed by an MUCC entity is identified by using a special logic signal number. For example, when the transmit end receives a MAC PDU whose logic channel number is 11010, the transmit end knows that this piece of data needs to be sent to the MUCC entity for splitting processing. Similarly, on the supporting UE and a receive end, data that needs to be processed by an MUCC entity may also be identified by using a special logic channel number. For example: on the supporting UE, after data having a special logic channel number is received, forwarding operation is performed by the MUCC entity; for the receive end, after data having a special logic channel number is received, first data that is received by using a direct link and the second data that is received by using a forwarding link are combined by the MUCC entity.

It should be noted that, the foregoing special logic channel number may be pre-configured on the base station side, the base station may configure a corresponding logic channel number for the base station side, the supporting UE, and the benefited UE, where the logic channel numbers of the base station side, the supporting UE and the benefited UE may be the same or different.

In a scenario in which one supporting UE assists in communication between one benefited UE and a base station, a data distribution process performed by an MUCC entity on a base station side is described below by using uplink transmission as an example. An eNB configures S-UE to forward a data flow of B-UE, where multiple RBs correspond to one MUCC entity. An RB1 of the B-UE corresponds to an e-RLC1 entity; after one data packet SN1 reaches a MAC layer of the B-UE, the data packet is directly sent to the base station by using a UU interface; a data packet SN2 is sent to the supporting UE, and an e-RLC2 corresponding to an RB2 also splits the data packet SN1 to the supporting UE for sending. The e-RLC 1 sends the data packet SN2 to an MUCC entity of the supporting UE; the e-RLC sends the data packet SN2 to the MUCC entity of the supporting UE, where the data packet SN2 and the data packet SN1 separately carry a sub-flow identifier that is configured by the base station for the benefited UE; the MUCC entity of the supporting UE cascades the data packet SN1 (serial number (Serial Number, SN for short)) and the data packet SN2, and adds a header shown in FIG. 7. Then, the MUCC entity of the supporting UE delivers the cascaded data packets to a MAC entity of the benefited UE in a downlink direction, and the MAC entity adds a MAC header. After the MAC entity generates a MAC packet, the MAC entity performs normal scheduling and sending.

In a scenario in which one supporting UE assists in communication between multiple benefited UEs and a base station, when benefited UE1 and benefited UE2 send, in a downlink direction, second data to an MUCC entity of the supporting UE, the second data carries a respective sub-flow identifier, where the sub-flow identifier is used to identify the benefited UE corresponding to the supporting UE. When the benefited UE receives, from the base station, the second data that needs to be forwarded, a MAC entity of the benefited UE sends, according to a logic channel number, the second data to an MUCC entity for processing; the MUCC entity first performs ARQ reception processing, that is, the MUCC entity may determine an unreceived data packet in the second data according to a second link data packet sequence number carried in the second data packet, and request the base station to perform retransmission. If the second data is received correctly, de-cascading is performed on data packets for different benefited UEs, and the second data is put into buffers corresponding to different benefited UEs. A DMC side of the benefited UE retrieves the second data from the buffer according to an air interface transmission capability, first adds a header part except the sub-flow identifier, then adds a DMC-ARQ header, and then sends the second data to a DMC-MAC entity for sending processing.

In the foregoing specific implementation manners provided by FIG 3-FIG. 8b, multiple transmission modes may be supported, including an AM mode and a UM mode. In the AM mode, by adding a data packet sequence number to split data, reliability of data transmission from a network side to a terminal side can be improved; and during retransmission, a transmit end may re-select a transmission path for the split data, thereby further improving reliability of data transmission. By using a specific implementation manner in which an MUCC entity may be located below an RLC entity and above a MAC entity, functions of an existing Packet Data Convergence Protocol (Packet Data Convergence Protocal, PDCP for short) entity, an RLC entity, and a MAC entity in an LTE system can be reused as far as possible, so that implementation overheads are reduced, and complexity is decreased.

FIG. 9 is a schematic structural diagram of an embodiment of a data transmission device in a multiple user cooperative communication scenario according to the present invention. As shown in FIG. 9, the transmission device of this embodiment includes:
a processing module 101, configured to determine first data and second data from to-be-transmitted data according to link quality of a direct link and link quality of a forwarding link, where the first data is data directly transmitted from a first device to a second device, the second data is data transmitted from the first device to the second device through a third device, the third device is configured to assist in communication between the first device and the second device, the direct link is a link for directly transmitting the first data from the first device to the second device, and the forwarding link is a link for transmitting the second data from the first device to the second device through the third device;
a first transmission module 102, configured to directly transmit the first data determined by the processing module to the second device; and
a second transmission module 103, configured to transmit the second data determined by the processing module to the second device through the third device.

Further, the processing module 101 is specifically configured to:
determine, from the to-be-transmitted data according to a ratio between data transmission rates of the direct link and the forwarding link, the first data to be transmitted on the direct link and the second data to be transmitted on the forwarding link; and/or
determine, from the to-be-transmitted data according to a volume of data that has not been transmitted on the direct link and a volume of data that has not been transmitted on the forwarding link, the first data to be transmitted on the direct link and the second data to be transmitted on the forwarding link.

Further, the processing module 101 is further configured to:
after determining the first data and the second data from the to-be-transmitted data, add a first link data packet sequence number to the first data, where the first data packet sequence number is used to identify an unreceived data packet in the first data; and
add a second link data packet sequence number to the second data, where the second link data packet sequence number is used to identify an unreceived data packet in the second data.

Further, the processing module 101 is further configured to:
after determining the first data and the second data from the to-be-transmitted data, add a sub-flow identifier and a flow sequence number to the second data, where the sub-flow identifier is used to identify the second device corresponding to the second data, and the flow sequence number is used to identify the third device corresponding to the second data.

Further, the processing module 101 is further configured to:
after determining the first data and the second data from the to-be-transmitted data, add a first radio bearer identifier to the first data, where the first radio bearer identifier is used to represent a service to which the first data belongs; and add a second radio bearer identifier to the second data, where the second radio bearer identifier is used to represent a service to which the second data belongs.

Further, the first transmission module 102 is further configured to:
after the processing module determines the first data and the second data from the to-be-transmitted data, transmit first configuration information to the second device, where the first configuration information includes: a first logic sub-identifier corresponding to each radio bearer RB of the second device, and the first logic sub-identifier is used to represent that the first data and the second data are received on the RB.

Further, the second transmission module 103 is further configured to:
after the processing module determines the first data and the second data from the to-be-transmitted data, transmit second configuration information to the third device, where the second configuration information includes: a second logic sub-identifier corresponding to each RB of the third device, and the second logic sub-identifier is used to represent that the second data is forwarded on the RB.

Further, the first transmission module 102 is further configured to:
after directly transmitting the first data to the second device, if a reception acknowledgment for the first data is not received from the second device within a first set time, the first device sends the first data to the third device, so that the third device forwards the first data to the second device.

Further, the second transmission module 103 is further configured to: after transmitting the second data to the second device through the third device, if a reception acknowledgment for the second data is not received from the third device within a second set time, the first device directly sends the second data to the second device.

The transmission device in this embodiment may be configured to perform the technical solutions of the method embodiment shown in FIG. 1 and FIG. 3 to FIG. 8b, implementation principles and technical effects thereof are similar, and details are not described herein again.

FIG. 10 is a schematic structural diagram of another embodiment of a data transmission device in a multiple user cooperative communication scenario according to the present invention. As shown in FIG. 10, a transmission device is configured to assist in communication between a first device and a second device, and the device includes:
a receiving module 201, configured to receive second data transmitted by the first device, where the second data is determined by the first device from to-be-transmitted data according to quality of a direct link and quality of a forwarding link, the direct link is a link for directly transmitting the first data from the first device to the second device, and the forwarding link is a link for transmitting the second data from the first device to the second device through a third device; and
a sending module 202, configured to forward the second data received by the receiving module to the second device.

Further, the receiving module 201 is specifically configured to receive the second data that is sent by the first device and includes a second link data packet sequence number.

The transmission device in this embodiment may be configured to perform the technical solutions of the method embodiment shown in FIG. 2 to FIG. 8b, implementation principles and technical effects thereof are similar, and details are not described herein again.

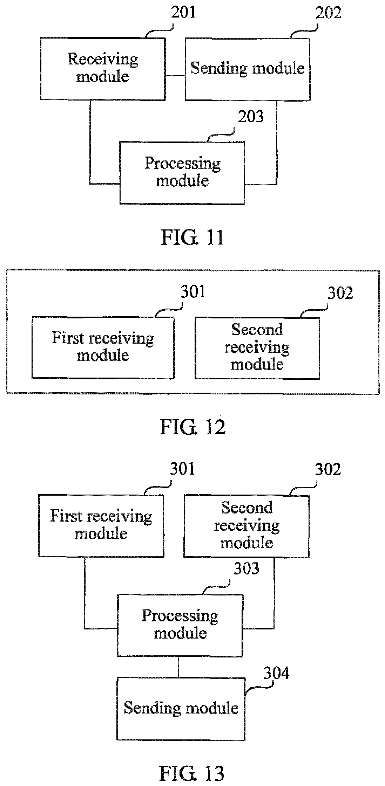

FIG. 11 is a schematic structural diagram of still another embodiment of a data transmission device in a multiple user cooperative communication scenario according to the present invention. As shown in FIG. 11, based on the transmission device shown in FIG. 10, the transmission device of this embodiment further includes:
a processing module 203, configured to determine an unreceived data packet sequence number in second data according to a second link data packet sequence number received by a receiving module, where
a sending module 202 is further configured to request a first device to retransmit a data packet that corresponds to the unreceived data packet sequence number determined by the processing module.

Further, a receiving module 201 is specifically configured to receive the second data that carries a second radio bearer identifier, where the second radio bearer identifier is used to represent a service to which the second data belongs; and
the processing module is further configured to: re-encapsulate a first data packet in the second data received by the receiving module into at least one second data packet, where data in each re-encapsulated second data packet has a same second radio bearer identifier received by the receiving module.

Further, the receiving module 201 is specifically configured to:
receive the second data that is sent by the first device and carries a flow sequence number and a sub-flow identifier, where the flow sequence number is used to identify a third device corresponding to the second data, and the sub-flow identifier is used to identify a second device corresponding to the second data; and
the sending module is specifically configured to send the second data to the second device corresponding to the third device according to the sub-flow identifier received by the receiving module.

Further, the receiving module 201 is further configured to:
receive configuration information transmitted from the first device, where the configuration information includes: a logic sub-identifier corresponding to each RB of the device, and the logic sub-identifier is used to represent that the second data is forwarded on the RB; and
the sending module is specifically configured to forward, on the RB corresponding to the logic sub-identifier, the second data to the second device according to the configuration information received by the receiving module.

The transmission device in this embodiment may be configured to perform the technical solutions of the method embodiment shown in FIG. 2 to FIG 8b, implementation principles and technical effects thereof are similar, and details are not described herein again.

FIG. 12 is a schematic structural diagram of still another embodiment of a data transmission device in a multiple user cooperative communication scenario according to the present invention, and the transmission device in this embodiment includes:
a first receiving module 301, configured to receive first data sent by a first device, where the first data is determined by the first device from to-be-transmitted data according to quality of a direct link and quality of a forwarding link, the direct link is a link for directly transmitting the first data from the first device to a second device, the forwarding link is a link for transmitting the second data from the first device to the second device through a third device, and the third device is configured to assist in communication between the first device and the second device; and
a second receiving module 302, configured to receive the second data forwarded by the third device.

Further, the first receiving module 301 is specifically configured to receive the first data that carries a first link data packet sequence number.

The transmission device in this embodiment may be configured to perform the technical solutions of the method embodiment shown in FIG. 3 to FIG. 8b, implementation principles and technical effects thereof are similar, and details are not described herein again.

FIG. 13 is a schematic structural diagram of another data transmission device in a multiple user cooperative communication scenario according to the present invention. As shown in FIG. 13, based on the transmission device shown in FIG. 12, the transmission device of this embodiment further includes:
a processing module 303, configured to determine an unreceived data packet sequence number in first data according to a first link data packet sequence number received by a first receiving module; and
a sending module 304, configured to request a first device to retransmit data that corresponds to the unreceived data packet sequence number determined by the processing module.

Further, a second receiving module 302 is specifically configured to receive second data that carries a second link data packet sequence number;
the processing module is further configured to determine an unreceived data packet sequence number in the second data according to the second link data packet sequence number received by the second receiving module; and
the sending module is further configured to request a third device to retransmit data that corresponds to the unreceived data packet sequence number determined by the processing module.

Further, the first data received by the first receiving module includes a first radio bearer identifier, where the first radio bearer identifier is used to identify a service to which the first data belongs; and
the second data received by the second receiving module includes a second radio bearer identifier, where the second radio bearer identifier is used to identify a service to which the second data belongs.

Further, the second receiving module 302 is specifically configured to: receive the second data that is sent by the third device and carries a sub-flow identifier and a flow sequence number, where the sub-flow identifier is configured to identify the second device corresponding to the second data, and the flow sequence number is used to identify the third device corresponding to the second data.

Further, the first receiving module 301 is further configured to: before receiving the first data sent by the first device, receive configuration information sent by the first device, where the configuration information includes: a logic sub-identifier corresponding to each radio bearer RB of the second device, and the first logic sub-identifier is used to represent that the first data and the second data are received on the RB;
the first receiving module 301 is specifically configured to receive, on the RB that corresponds to the logic sub-identifier and is used to receive the first data, the first data according to the configuration information; and
the second receiving module 302 is specifically configured to receive, on the RB that corresponds to the logic sub-identifier and is used to receive the second data, the second data according to the configuration information.

The transmission device in this embodiment may be configured to perform the technical solutions of the method embodiment shown in FIG. 3 to FIG. 8b, implementation principles and technical effects thereof are similar, and details are not described herein again.

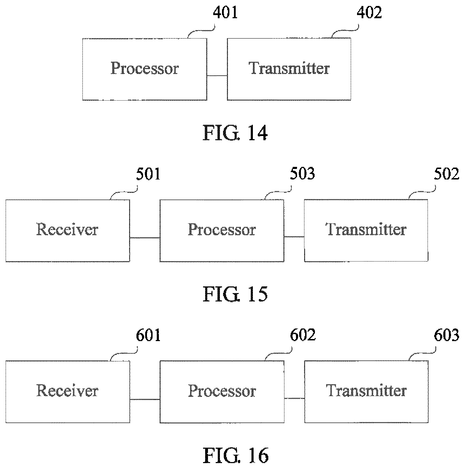

FIG. 14 is a schematic structural diagram of another data transmission device in a multiple user cooperative communication scenario according to the present invention, including:
a processor 401, configured to determine first data and second data from to-be-transmitted data according to link quality of a direct link and link quality of a forwarding link, where the first data is data directly transmitted from a first device to a second device, the second data is data transmitted from the first device to the second device through a third device, the third device is configured to assist in communication between the first device and the second device, the direct link is a link for directly transmitting the first data from the first device to the second device, and the forwarding link is a link for transmitting the second data from the first device to the second device through the third device;
a transmitter 402, configured to directly transmit the first data determined by the processor to the second device, where
the transmitter 402 is configured to transmit the second data determined by the processor to the second device through the third device.

The processor 401 is specifically configured to:
determine, from the to-be-transmitted data according to a ratio between data transmission rates of the direct link and the forwarding link, the first data to be transmitted on the direct link and the second data to be transmitted on the forwarding link; and/or
determine, from the to-be-transmitted data according to a volume of data that has not been transmitted on the direct link and a volume of data that has not been transmitted on the forwarding link, the first data to be transmitted on the direct link and the second data to be transmitted on the forwarding link.

Further, the processor 401 is further configured to:
after determining the first data and the second data from the to-be-transmitted data, add a first link data packet sequence number to the first data, where the first data packet sequence number is used to identify an unreceived data packet in the first data; and
add a second link data packet sequence number to the second data, where the second link data packet sequence number is used to identify an unreceived data packet in the second data.

Further, the processor 401 is further configured to:
after determining the first data and the second data from the to-be-transmitted data, add a sub-flow identifier and a flow sequence number to the second data, where the sub-flow identifier is used to identify the second device corresponding to the second data, and the flow sequence number is used to identify the third device corresponding to the second data.

Further, the processor 401 is further configured to:
after determining the first data and the second data from the to-be-transmitted data, add a first radio bearer identifier to the first data, where the first radio bearer identifier is used to represent a service to which the first data belongs; and add a second radio bearer identifier to the second data, where the second radio bearer identifier is used to represent a service to which the second data belongs.

Further, the transmitter 402 is further configured to:
after the processor determines the first data and the second data from the to-be-transmitted data, transmit first configuration information to the second device, where the first configuration information includes: a first logic sub-identifier corresponding to each radio bearer RB of the second device, and the first logic sub-identifier is used to represent that the first data and the second data are transmitted on the RB.

Further, the transmitter 402 is further configured to:
after the processor determines the first data and the second data from the to-be-transmitted data, transmit second configuration information to the third device, where the second configuration information includes: a second logic sub-identifier corresponding to each RB of the third device, and the second logic sub-identifier is used to represent that the second data is forwarded on the RB.

Further, the transmitter 403 is further configured to:
after directly transmitting the first data to the second device, if a reception acknowledgment for the first data is not received from the second device within a first set time, the first device transmits the first data to the third device, so that the third device forwards the first data to the second device.

Further, the transmitter 404 is further configured to: after transmitting the second data to the second device through the third device, if a reception acknowledgment for the second data is not received from the third device within a second set time, the first device directly transmits the second data to the second device.

The transmission device in this embodiment may be configured to perform the technical solutions of the method embodiment shown in FIG. 1 and FIG. 3 to FIG. 8b, implementation principles and technical effects thereof are similar, and details are not described herein again.

FIG. 15 provides a schematic structural diagram of another data transmission device in a multiple user cooperative communication scenario, where the transmission device is configured to assist in communication between the first device and a second device, and includes:
a receiver 501, configured to receive second data transmitted by the first device, where the second data is determined by the first device from to-be-transmitted data according to quality of a direct link and quality of a forwarding link, the direct link is a link for directly transmitting the first data from the first device to the second device, and the forwarding link is a link for transmitting the second data from the first device to the second device through the third device; and
a transmitter 502, configured to forward the second data received by the receiver 501 to the second device.

The receiver 501 is specifically configured to receive the second data that is sent by the first device and includes a second link data packet sequence number;
further, the device further includes:
a processor 503, configured to determine an unreceived data packet sequence number in the second data according to the second link data packet sequence number received by the receiver; and
the transmitter 502 is further configured to request the first device to retransmit a data packet that corresponds to the unreceived data packet sequence number determined by the processor.

The receiver 501 is specifically configured to receive the second data that carries a second radio bearer identifier, where the second radio bearer identifier is used to represent a service to which the second data belongs; and
further, the processor 503 is further configured to: re-encapsulate a first data packet in the second data received by the receiver into at least one second data packet, where data in each re-encapsulated second data packet has a same second radio bearer identifier received by the receiver.

The receiver 501 is specifically configured to receive the second data that is sent by the first device and carries a flow sequence number and a sub-flow identifier, where the flow sequence number is used to identify the third device corresponding to the second data, and the sub-flow identifier is used to identify the second device corresponding to the second data; and
the transmitter 502 is specifically configured to send the second data to the second device corresponding to the third device according to the sub-flow identifier received by the receiver.

Further, the receiver 501 is further configured to receive configuration information transmitted from the first device, where the configuration information includes: a logic sub-identifier corresponding to each RB of the device, and the logic sub-identifier is used to represent that the second data is forwarded on the RB; and
the transmitter 502 is specifically configured to forward, on the RB corresponding to the logic sub-identifier, the second data to the second device according to the configuration information received by the receiver.

The transmission device in this embodiment may be configured to perform the technical solutions of the method embodiment shown in FIG. 2 to FIG. 8b, implementation principles and technical effects thereof are similar, and details are not described herein again.

FIG. 16 provides a schematic structural diagram of still another data transmission device in a multiple user cooperative communication scenario, including:
a receiver 601, configured to receive first data sent by a first device, where the first data is determined by the first device from to-be-transmitted data according to quality of a direct link and quality of a forwarding link, the direct link is a link for directly transmitting the first data from the first device to a second device, the forwarding link is a link for transmitting the second data from the first device to the second device through a third device, and the third device is configured to assist in communication between the first device and the second device, where
   the receiver 601 is configured to receive the second data forwarded by the third device.

The receiver 601 is specifically configured to receive the first data that carries a first link data packet sequence number; and
the device further includes:
a processor 602, configured to determine an unreceived data packet sequence number in the first data according to the first link data packet sequence number received by the receiver 601; and
a transmitter 603, configured to request the first device to retransmit data that corresponds to the unreceived data packet sequence number determined by the processor 602.

The receiver 601 is specifically configured to receive the second data that carries a second link data packet sequence number;
further, the processor 602 is further configured to determine an unreceived data packet sequence number in the second data according to the second link data packet sequence number received by the receiver; and
the transmitter 603 is further configured to request the third device to retransmit data that corresponds to the unreceived data packet sequence number determined by the processor.

The first data received by the receiver 601 includes a first radio bearer identifier, where the first radio bearer identifier is used to identify a service to which the first data belongs; and the received second data includes a second radio bearer identifier, where the second radio bearer identifier is used to identify a service to which the second data belongs.

The receiver 601 is specifically configured to: receive the second data that is sent by the third device and carries a sub-flow identifier and a flow sequence number, where the sub-flow identifier is configured to identify the second device corresponding to the second data, and the flow sequence number is used to identify the third device corresponding to the second data.

Further, the receiver 601 is further configured to: before receiving the first data sent by the first device, receive configuration information sent by the first device, where the configuration information includes: a logic sub-identifier corresponding to each radio bearer RB of the second device, and the first logic sub-identifier is used to represent that the first data and the second data are transmitted on the RB;
the receiver 601 is specifically configured to receive, on the RB that corresponds to the logic sub-identifier and is used to receive the first data, the first data according to the configuration information; and
the receiver 601 is specifically configured to receive, on the RB that corresponds to the logic sub-identifier and is used to receive the second data, the second data according to the configuration information.

The transmission device in this embodiment may be configured to perform the technical solutions of the method embodiment shown in FIG. 3 to FIG 8b, implementation principles and technical effects thereof are similar, and details are not described herein again.

The present invention further provides an embodiment of a data transmission system in a multiple user cooperative communication scenario; the system includes a first device, a second device, and a third device, where the third device is configured to assist in communication between the first device and the second device.

As a feasible embodiment, in the data transmission system in a multiple user cooperative communication scenario, for a specific structure of the first device and a data transmission method performed by the first device, reference may be made to related descriptions in the embodiment shown in FIG. 9; for a specific structure of the second device and a data transmission method performed by the second device, reference may be made to related descriptions in the embodiments shown in FIG 12 and FIG. 13; and for a specific structure of the third device and a data transmission method performed by the third device, reference may be made to related descriptions in the embodiments shown in FIG 10 and FIG. 11; details are not described herein again.

As another feasible embodiment, in the data transmission system in a multiple user cooperative communication scenario, for a specific structure of the first device and a data transmission method performed by the first device, reference may be made to related descriptions in the embodiment shown in FIG. 14; for a specific structure of the second device and a data transmission method performed by the second device, reference may be made to related descriptions in the embodiments shown in FIG 16; and for a specific structure of the third device and a data transmission method performed by the third device, reference may be made to related descriptions in the embodiments shown in FIG 15; details are not described herein again.

Persons of ordinary skill in the art may understand that all or some of the steps of the method embodiments may be implemented by a program instructing related hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data transmission method in a multiple user cooperative communication scenario, comprising:
determining, by the first device, first data and second data from to-be-transmitted data according to link quality of a direct link and link quality of a forwarding link, wherein the first data is data directly transmitted from the first device to a second device, the second data is data transmitted from the first device to the second device through a third device, the third device is configured to assist in communication between the first device and the second device, the direct link is a link for directly transmitting the first data from the first device to the second device, and the forwarding link is a link for transmitting the second data from the first device to the second device through the third device;
directly transmitting, by the first device, the first data to the second device; and
transmitting, by the first device, the second data to the second device through the third device.

2. The method according to claim 1, wherein the determining, by a first device, first data and second data from to-be-transmitted data according to link quality of a direct link and link quality of a forwarding link comprises:
determining, by the first device from the to-be-transmitted data according to a ratio between data transmission rates of the direct link and the forwarding link, the first data to be transmitted on the direct link and the second data to be transmitted on the forwarding link; and/or
determining, by the first device from the to-be-transmitted data according to a volume of data that has not been transmitted on the direct link and a volume of data that has not been transmitted on the forwarding link, the first data to be transmitted on the direct link and the second data to be transmitted on the forwarding link.

3. The method according to claim 1 or 2, after the determining first data and second data from to-be-transmitted data, further comprising:
adding, by the first device, a first link data packet sequence number to the first data, wherein the first data packet sequence number is used to identify an unreceived data packet in the first data; and
adding, by the first device, a second link data packet sequence number to the second data, wherein the second link data packet sequence number is used to identify an unreceived data packet in the second data.

4. The method according to claim 3, after the determining first data and second data from to-be-transmitted data, further comprising:
adding, by the first device, a sub-flow identifier and a flow sequence number to the second data, wherein the sub-flow identifier is used to identify the second device corresponding to the second data, and the flow sequence number is used to identify the third device corresponding to the second data.

5. The method according to any one of claim 3 or 4, after the determining first data and second data from to-be-transmitted data, further comprising:
adding, by the first device, a first radio bearer identifier to the first data, wherein the first radio bearer identifier is used to represent a service to which the first data belongs; and
adding, by the first device, a second radio bearer identifier to the second data, wherein the second radio bearer identifier is used to represent a service to which the second data belongs.

6. The method according to any one of claims 3 to 5, after the determining first data and second data from to-be-transmitted data, further comprising:
transmitting, by the first device, first configuration information to the second device, wherein the first configuration information comprises: a first logic sub-identifier corresponding to each radio bearer RB of the second device, and the first logic sub-identifier is used to represent that the first data and the second data are transmitted on the RB.

7. The method according to claim 6, after the determining first data and second data from to-be-transmitted data, further comprising:
transmitting, by the first device, second configuration information to the third device, wherein the second configuration information comprises: a second logic sub-identifier corresponding to each RB of the third device, and the second logic sub-identifier is used to represent that the second data is forwarded on the RB.

8. The method according to any one of claims 3 to 7, after the directly transmitting, by the first device, the first data to the second device, further comprising:
if the first device does not receive, from the second device within a first set time, a reception acknowledgment for the first data, sending, by the first device, the first data to the third device, so that the third device forwards the first data to the second device.

9. The method according to claim 8, after the transmitting, by the first device, the second data to the second device through the third device, further comprising:
if the first device does not receive, from the third device within a second set time, a reception acknowledgment for the second data, directly transmitting, by the first device, the second data to the second device.

10. A data transmission method in a multiple user cooperative communication scenario, comprising:
receiving, by a third device, second data sent by a first device, wherein the third device is configured to assist in communication between the first device and a second device, the second data is determined by the first device from to-be-transmitted data according to quality of a direct link and quality of a forwarding link, the direct link is a link for directly transmitting first data from the first device to the second device, and the forwarding link is a link for transmitting the second data from the first device to the second device through the third device; and
forwarding, by the third device, the second data to the second device.

11. The method according to claim 10, wherein when the second data comprises a second link data packet sequence number, after the receiving, by a third device, second data sent by a first device, the method further comprises:
determining, by the third device according to the second link data packet sequence number, an unreceived data packet sequence number in the second data; and
requesting, by the third device, the first device to retransmit a data packet that corresponds to the unreceived data packet sequence number.

12. The method according to claim 11, wherein the second data comprises a second radio bearer identifier, wherein the second radio bearer identifier is used to represent a service to which the second data belongs; and after the receiving, by a third device, second data sent by a first device, the method further comprises:
re-encapsulating, by the third device, a first data packet in the second data into at least one second data packet, wherein data in each second data packet has a same second radio bearer identifier.

13. The method according to claim 11 or 12, wherein the receiving, by a third device, second data sent by a first device comprises:
receiving, by the third device, the second data that is sent by the first device and carries a flow sequence number and a sub-flow identifier, wherein the flow sequence number is used to identify the third device corresponding to the second data, and the sub-flow identifier is used to identify the second device corresponding to the second data; and
the forwarding, by the third device, the second data to the second device comprises:
sending, by the third device, the second data to the second device corresponding to the third device according to the sub-flow identifier.

14. The method according to any one of claims 11 to 13, before the receiving, by a third device, second data sent by a first device, further comprising:
receiving, by the third device, configuration information transmitted from the first device, wherein the configuration information comprises: a logic sub-identifier corresponding to each RB of the third device, and the logic sub-identifier is used to represent that the second data is forwarded on the RB; and
the forwarding, by the third device, the second data to the second device comprises:
forwarding, by the third device on the RB corresponding to the logic sub-identifier, the second data to the second device according to the configuration information.

15. A data transmission device in a multiple user cooperative communication scenario, comprising:
a processing module, configured to determine first data and second data from to-be-transmitted data according to link quality of a direct link and link quality of a forwarding link, wherein the first data is data directly transmitted from a first device to a second device, the second data is data transmitted from the first device to the second device through a third device, the third device is configured to assist in communication between the first device and the second device, the direct link is a link for directly transmitting the first data from the first device to the second device, and the forwarding link is a link for transmitting the second data from the first device to the second device through the third device;
a first transmission module, configured to directly transmit the first data determined by the processing module to the second device; and
a second transmission module, configured to transmit the second data determined by the processing module to the second device through the third device.

16. The device according to claim 15, wherein the processing module is specifically configured to:
determine, from the to-be-transmitted data according to a ratio between data transmission rates of the direct link and the forwarding link, the first data to be transmitted on the direct link and the second data to be transmitted on the forwarding link; and/or
determine, from the to-be-transmitted data according to a volume of data that has not been transmitted on the direct link and a volume of data that has not been transmitted on the forwarding link, the first data to be transmitted on the direct link and the second data to be transmitted on the forwarding link.

17. The device according to claim 15 or 16, wherein the processing module is further configured to:
after determining the first data and the second data from the to-be-transmitted data, add a first link data packet sequence number to the first data, wherein the first data packet sequence number is used to identify an unreceived data packet in the first data; and
add a second link data packet sequence number to the second data, wherein the second link data packet sequence number is used to identify an unreceived data packet in the second data.

18. The device according to claim 17, wherein the processing module is further configured to:
after determining the first data and the second data from the to-be-transmitted data, add a sub-flow identifier and a flow sequence number to the second data, wherein the sub-flow identifier is used to identify the second device corresponding to the second data, and the flow sequence number is used to identify the third device corresponding to the second data.

19. The device according to claim 17 or 18, wherein the processing module is further configured to:
after determining the first data and the second data from the to-be-transmitted data, add a first radio bearer identifier to the first data, wherein the first radio bearer identifier is used to represent a service to which the first data belongs; and add a second radio bearer identifier to the second data, wherein the second radio bearer identifier is used to represent a service to which the second data belongs.

20. The device according to any one of claims 17 to 19, wherein the first transmission module is further configured to:
after the processing module determines the first data and the second data from the to-be-transmitted data, transmit first configuration information to the second device, wherein the first configuration information comprises: a first logic sub-identifier corresponding to each radio bearer RB of the second device, and the first logic sub-identifier is used to represent that the first data and the second data are transmitted on the RB.

21. The device according to claim 20, wherein the second transmission module is further configured to:
after the processing module determines the first data and the second data from the to-be-transmitted data, transmit second configuration information to the third device, wherein the second configuration information comprises: a second logic sub-identifier corresponding to each RB of the third device, and the second logic sub-identifier is used to represent that the second data is forwarded on the RB.

22. The device according to any one of claims 17 to 21, wherein the first transmission module is further configured to:
after directly transmitting the first data to the second device, if a reception acknowledgment for the first data is not received from the second device within a first set time, the first device transmits the first data to the third device, so that the third device forwards the first data to the second device.

23. The device according to claim 22, wherein the second transmission module is further configured to: after transmitting the second data to the second device through the third device, if a reception acknowledgment for the second data is not received from the third device within a second set time, the first device directly transmits the second data to the second device.

24. A data transmission device in a multiple user cooperative communication scenario, wherein the transmission device is configured to assist in communication between the first device and a second device, and comprises:
a receiving module, configured to receive second data transmitted by the first device, wherein the second data is determined by the first device from to-be-transmitted data according to quality of a direct link and quality of a forwarding link, the direct link is a link for directly transmitting the first data from the first device to the second device, and the forwarding link is a link for transmitting the second data from the first device to the second device through the third device; and
a sending module, configured to forward the second data received by the receiving module to the second device.

25. The device according to claim 24, wherein
the receiving module is specifically configured to receive the second data that is sent by the first device and comprises a second link data packet sequence number;
the device further comprises:
a processing module, configured to determine an unreceived data packet sequence number in the second data according to the second link data packet sequence number received by the receiving module; and
the sending module is further configured to request the first device to retransmit a data packet that corresponds to the unreceived data packet sequence number determined by the processing module.

26. The device according to claim 25, wherein
the receiving module is specifically configured to receive the second data that carries a second radio bearer identifier, wherein the second radio bearer identifier is used to represent a service to which the second data belongs; and
the processing module is further configured to: re-encapsulate a first data packet in the second data received by the receiving module into at least one second data packet, wherein data in each re-encapsulated second data packet has a same second radio bearer identifier received by the receiving module.

27. The device according to claim 25 or 26, wherein the receiving module is specifically configured to:
receive the second data that is sent by the first device and carries a flow sequence number and a sub-flow identifier, wherein the flow sequence number is used to identify the third device corresponding to the second data, and the sub-flow identifier is used to identify the second device corresponding to the second data; and
the sending module is specifically configured to send the second data to the second device corresponding to the third device according to the sub-flow identifier received by the receiving module.

28. The device according to any one of claims 25 to 27, wherein the receiving module is further configured to:
receive configuration information transmitted from the first device, wherein the configuration information comprises: a logic sub-identifier corresponding to each RB of the device, and the logic sub-identifier is used to represent that the second data is forwarded on the RB; and
the sending module is specifically configured to forward, on the RB corresponding to the logic sub-identifier, the second data to the second device according to the configuration information received by the receiving module.

29. A data transmission device in a multiple user cooperative communication scenario, comprising:
a first receiving module, configured to receive first data sent by a first device, wherein the first data is determined by the first device from to-be-transmitted data according to quality of a direct link and quality of a forwarding link, the direct link is a link for directly transmitting the first data from the first device to a second device, the forwarding link is a link for transmitting the second data from the first device to the second device through a third device, and the third device is configured to assist in communication between the first device and the second device; and
a second receiving module, configured to receive the second data forwarded by the third device.

30. The device according to claim 29, wherein
the first receiving module is specifically configured to receive the first data that carries a first link data packet sequence number; and
the device further comprises:
a processing module, configured to determine an unreceived data packet sequence number in the first data according to the first link data packet sequence number received by the first receiving module; and
a sending module, configured to request the first device to retransmit data that corresponds to the unreceived data packet sequence number determined by the processing module.

31. The device according to claim 30, wherein
the second receiving module is specifically configured to receive the second data that carries a second link data packet sequence number;
the processing module is further configured to determine an unreceived data packet sequence number in the second data according to the second link data packet sequence number received by the second receiving module; and
the sending module is further configured to request the third device to retransmit data that corresponds to the unreceived data packet sequence number determined by the processing module.

32. The device according to claim 31, wherein the first data received by the first receiving module comprises a first radio bearer identifier, wherein the first radio bearer identifier is used to identify a service to which the first data belongs; and
the second data received by the second receiving module comprises a second radio bearer identifier, wherein the second radio bearer identifier is used to identify a service to which the second data belongs.

33. The device according to claim 31 or 32, wherein the second receiving module is specifically configured to receive the second data that is sent by the third device and carries a sub-flow identifier and a flow sequence number, wherein the sub-flow identifier is used to identify the second device corresponding to the second data, and the flow sequence number is used to identify the third device corresponding to the second data.

34. The device according to any one of claims 31 to 33, wherein the first receiving module is further configured to: before receiving the first data sent by the first device, receive configuration information sent by the first device, wherein the configuration information comprises: a logic sub-identifier corresponding to each radio bearer RB of the second device, and the first logic sub-identifier is used to represent that the first data and the second data are transmitted on the RB;
the first receiving module is specifically configured to receive, on the RB that corresponds to the logic sub-identifier and is used to receive the first data, the first data according to the configuration information; and
the second receiving module is specifically configured to receive, on the RB that corresponds to the logic sub-identifier and is used to receive the second data, the second data according to the configuration information.

35. A data transmission system in a multiple user cooperative communication scenario, comprising a first device, a second device, and a third device, wherein the first device is the device according to any one of claims 15 to 23, the second device is the device according to any one of claims 29 to 34, the third device is the device according to any one of claims 24 to 28; and the third device is configured to assist in communication between the first device and the second device.
